# EUROPEAN PATENT SPECIFICATION

(11) **EP 3 175 750 B1**
(45) Date of publication and mention of the grant of the patent: **06.03.2019**
(21) Application number: 15827834.1
(22) Date of filing: 24.07.2015
(51) Int. Cl.: A47J 31/44, A47J 31/50

(54) **APPARATUS FOR MAKING BEVERAGES HAVING A LIQUID VOLUME STORAGE TANK**
VORRICHTUNG ZUR HERSTELLUNG VON GETRÄNKE MIT EINEM FLÜSSIGKEITSVOLUMENSPEICHERTANK
APPAREIL DE PRÉPARATION DE BOISSONS POURVU D'UN RÉSERVOIR DE STOCKAGE DE VOLUME LIQUIDE

(30) Priority: 28.07.2014 BR 102014018464
(43) Date of publication of application: 07.06.2017
(73) Proprietor: Whirlpool S.A., 04578-000 São Paulo - SP (BR)
(72) Inventor: CARGNIN, Adriano, 89239-080 Joinville - SC (BR); BONA, Gustavo Lazzaris De, 89223-010 Joinville - SC (BR); SILVA, Alisson Costa Da, 89211-310 Joinville - SC (BR)
(74) Representative: Soldatini, Andrea
(86) International application number: PCT/BR2015/050100
(87) International publication number: WO 2016/015118

(56) References cited:
- WO-A1-2011/089210
- BR-A- 8 505 918
- DE-U1-202011 052 328
- PT-E- 2 525 693
- US-A- 3 915 341
- US-A- 4 703 870
- US-A- 5 539 856
- US-B2- 7 013 794

## Description

### Field of the Invention

The present invention relates to an apparatus for making beverages, and more particularly an apparatus for making beverages provided with at least one liquid-volume storage tank. According to the invention in question, the liquid volume storage tank further has thermal storage characteristics, enabling the liquid volume to be kept hot or cold.

Generally, the core of the invention concerns the means of access to the liquid volume storage tank, which is enclosed within the carafe of the beverage apparatus. Said liquid volume storage tank access means permits the maintenance and/or removal of said tank without it being necessary to disassemble the entire casing of the apparatus for making beverages.

As known to those skilled in the art, the present state of the art comprises a multitude of designs and constructions of beverage making apparatus or beverage dispensing apparatus.

The vast majority of these apparatus, especially those skilled in the preparation of beverages, comprise at least one liquid volume storage tank, where, as a rule, water is stored. In this sense, it is common for water to be stored under conditions suitable for the preparation of the beverage, that is, in apparatus for the preparation of hot beverages, it is normal for water to be stored at high temperature, and in apparatus for preparing cold beverages is normal Stored at low temperatures.

Thus, it is common for, regardless of the water heating or cooling medium, the liquid volume storage tank of the apparatus for making (or simply dispensing) beverages is also associated with a thermal preservation medium, i.e. means capable of maintaining or prolonging the temperature of the liquid volume.

Among these thermal preservation media are the active media (electric resistance, Peltier pellets, among others) and passive media (thermal blanket, expanded polystyrene coating, among others).

With respect to apparatus for making (or simply dispensing) beverages provided with a liquid storage tank and a thermal storage medium, it is to be noted that the assembly formed by the storage tank of liquid volume and passive medium of are arranged in the interior of the housing of the beverage apparatus and in particular are arranged so as to use the smallest possible physical volume and in order to provide for other systems and/or equipment housed around it.

This means that, basically, the access - for removal or maintenance - of liquid storage tank is too complicated, requiring, at a minimum, the dismantling of the whole casing of the apparatus for making beverages and, in the worst case, the dismantling of the whole casing of the apparatus for making beverages and other systems and/or equipment arranged on the under said storage tank of liquid volume.

An example of known apparatus is disclosed by DE202011052328U1. This apparatus discloses a common liquid storage container/shell with a portion of passive internal thermal insulation and a liquid storage insert/reservoir, the shell comprising a pivotable top cover, the portion of internal thermal insulator being open/leaked in the region of the pivotable top cover, which impairs thermal insulation.

In this regard, it is possible to state that the current embodiments of apparatus for making beverages do not privilege the maintenance thereof and, more specifically, do not privilege the maintenance and access to the liquid volume storage tank. It is from this scenario that the invention in question arises.

### Objectives of the invention

It is therefore one of the objects of the present invention to disclose a beverage dispensing apparatus provided with a liquid volume storage tank consubstantiated by easy access to said liquid volume storage tank.

In particular, it is an object of the invention in question that, even if there is an assembly formed by a liquid volume storage tank and a passive thermal storage means enclosed within the housing of the beverage making apparatus, it is easy access to said liquid volume storage tank.

Accordingly, it is intended that the removal and/or maintenance of the liquid volume storage tank may be performed without making it necessary to fully disassemble the housing of the beverage apparatus.

### Summary of the Invention

The above-mentioned objects are achieved by means of the invention on-screen, which discloses an apparatus for making beverages provided with a liquid-volume storage tank which, comprising at least one outer casing, at least one liquid-volume storage tank And at least one thermal storage medium comprises easy access to said liquid volume storage tank.

According to the invention in question, the liquid volume storage tank and the thermal storage medium are disposed within the outer casing, and, in addition, the liquid volume storage tank is substantially enclosed by the thermal conservation storage medium.

In general terms, the invention in question is highlighted in that the outer casing comprises at least one detachable portion and the thermal preservation means comprises at least one detachable portion, both portions being detachable (the detachable portion of the Outer casing and the detachable portion of the thermal preservation medium) disposed aligned with each other and aligned relative to the position of the liquid volume storage tank.

### Brief Description of Drawings

The preferred embodiment of the subject invention is detailed in detail on the basis of the following figures, which:
Figure 1 shows schematically the interior of the beverage dispensing apparatus according to the invention in question;
Figure 2 schematically shows the lower portion of the beverage dispensing apparatus according to the invention in question;
Figures 3 and 4 show, in perspective, the assembly formed by the liquid volume storage tank and heat conservation passive means;
Figure 5 shows, in exploded perspective, the assembly formed by the liquid volume storage tank and heat conservation passive means; and
Figures 6 and 7 illustrate, schematically and exploded, the apparatus for making beverage according to the invention in question.

### Detailed Description of the Invention

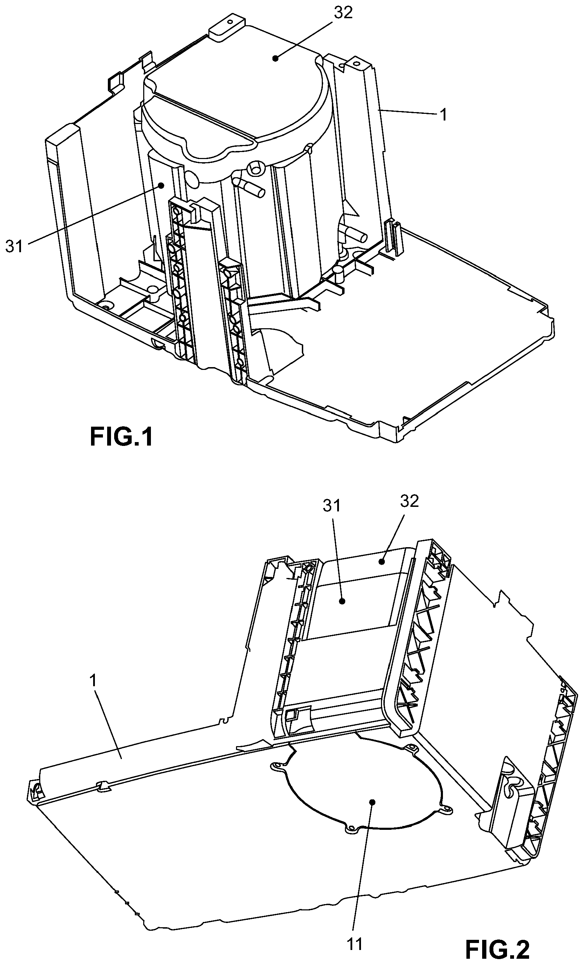

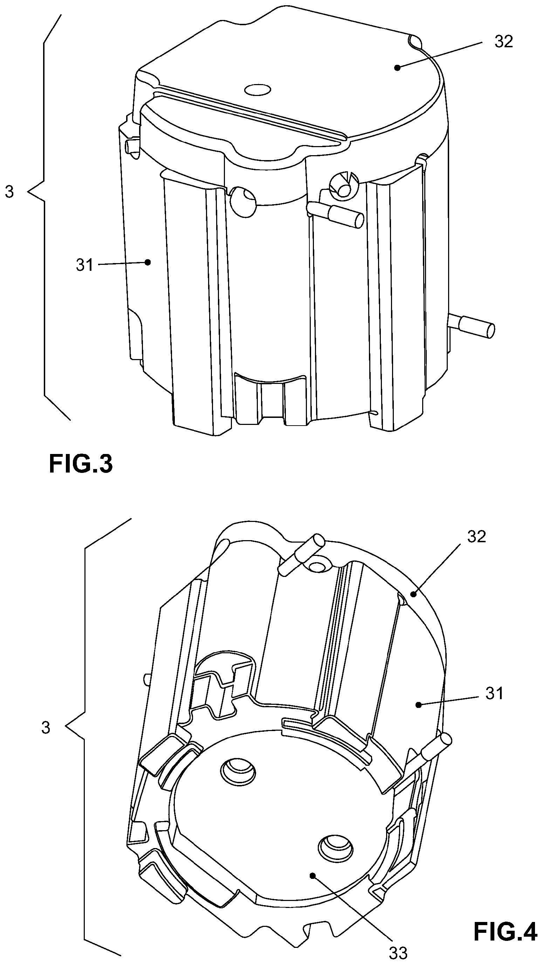

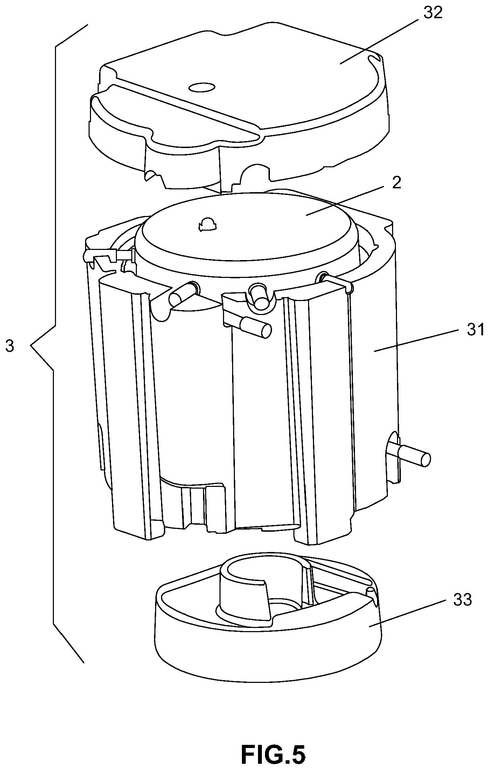

Figures 1, 2, 3, 4, 5, 6 and 7 illustrate the preferred embodiment of the subject invention.

As will be appreciated, and in accordance with the preferred embodiment of the invention in question, there is disclosed an apparatus for making beverages, which may comprise a simple water purifier known to those skilled in the art, or an apparatus Which, in addition to comprising water purification and dispensing systems, further provides at least one skilled means of preparing beverages based on external flavoring means, for example, an espresso machine, an ice-cream machine (refrigerators), or a conjugated machine capable of making espresso (and other hot drinks) and iced beverages (soft drinks and others).

However, irrespective of the purpose of the beverage dispensing apparatus, that is, irrespective of the type of beverage to be prepared, filtered and finally dispensed, it is the sole prerogative that it is composed of at least one beverage tank. Storage of liquid volume, which can be stored to store cold water, hot water, water at natural temperature, ready-to-drink beverages at high temperature, low temperature ready beverages, and other non-exhaustive options of related liquids in one form or another, With the beverage to be prepared/filtered/dispensed.

Thus, it is to be noted that among the system and elements not shown as not incorporating the core of the invention in question, the apparatus for making beverages heretofore disclosed comprises an outer casing 1, a liquid-volume storage tank 2 and a liquid thermal storage medium 3 dedicated to said liquid volume storage tank 2.

In general terms, said outer casing 1 can be interpreted as the chassis/cabinet of the beverage making apparatus, that is, it can be interpreted as the body which, in addition to structural function, defines the external portion of the apparatus for making drinks. In the illustrative figures, only the lower portion of the outer casing 1 is shown, which can be split.

The liquid volume storage tank 2, in brief, comprises a simple tank arranged to contain, in its internal space, a certain amount of liquid. Thus, it can be inferred that the liquid volume storage tank 2 comprises a closed chamber type provided with at least one liquid inlet pipe and at least one liquid outlet pipe.

The thermal storage medium 3 (in particular, thermal storage medium) in turn comprises - in accordance with the preferred embodiment of the invention - a tripartite body (composed of a central portion 31, an upper portion 32 and a lower portion 33) of expanded polystyrene or the like, molded according to the external shape of the liquid volume storage tank 2. It is to be emphasized that said tripartite body, which could be split, can be made in any Material that has thermal insulation properties.

Until then, the existence of beverage makers composed of an outer casing 1, a liquid volume storage tank 2 and a thermal storage medium 3 is normal and widely contemplated in the present state of the art.

In addition, it is normal for the liquid volume storage tank 2 and the thermal storage medium 3 to be disposed within the outer casing 1 and in particular that the liquid volume storage tank 2 is substantially enveloped by the thermal conservation medium 3.

However, and as previously explained, according to the apparatus for making beverages provided for in the present state of the art, once the apparatus is mounted, it becomes difficult to access the liquid volume storage tank.

It is in this respect that the present invention is highlighted.

That is because the outer casing 1 comprises at least one detachable portion 11 and, in addition, the thermal preservation means 3 comprises at least one detachable portion 33, said detachable portions being arranged in alignment with each other and aligned relative to the positioning of the Liquid storage tank 2.

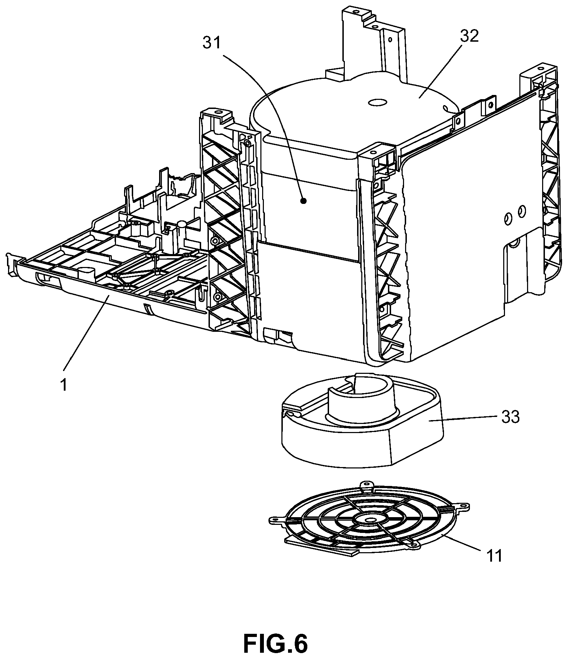

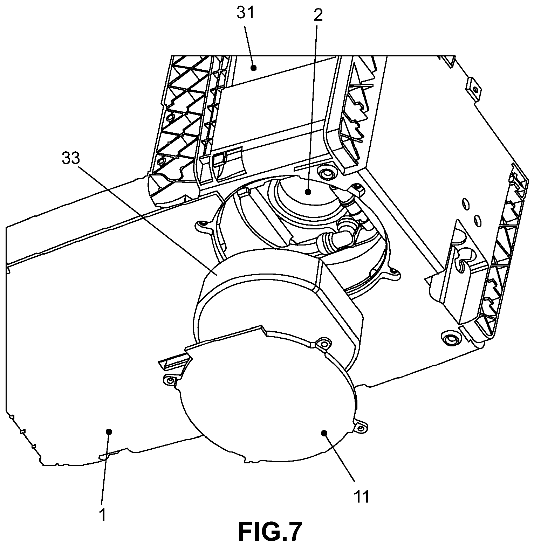

Such construction enables, as best shown in Figures 6 and 7, that the simple removal of the detachable portion 11 and detachable portion 33 enables direct access to the liquid volume storage tank 2, without the need to disassemble the apparatus to make drinks.

This allows said liquid volume storage tank 2 to be removed from the interior of the apparatus to make beverages - for replacement, maintenance or repair - without it being necessary to change the arrangement of other systems and internal elements.

Preferably, both the detachable portion 11 and the detachable portion 33 are of a sizeable shape and size to enable the integral removal of the liquid volume storage tank 2. However, this aspect is purely optional, and the invention in question could to provide a detachable portion 11 and a detachable portion 33 of minimal shape and size so as to provide access - still direct - restricted to some portion of particular interest of the liquid volume storage tank 2, such as some drain portion or injection of cleaning fluid, for example.

Preferably but never limitatively, the detachable portion 11 is disposed in the lower region of the outer casing 1 and, consequently, the detachable portion 33 comprises the lower portion of the thermal conservation means 3).

It is to be emphasized that both the detachable portion 11 and the detachable portion 33 are reattachable in the beverage maker. Thus, upon replacement, maintenance or repair of the liquid volume storage tank 2, the detachable portion 11 and the detachable portion 33 may - and should - be repositioned at their locations of origin.

Accordingly, both the detachable portion 11 and the detachable portion 33 have attachment means.

In the case of the preferred embodiment of the invention, the detachable portion 11 is secured to the outer casing 1 by means of screws, and the detachable portion 33 is secured to the thermal storage means 3 (especially to the intermediate portion 32 of the transfer medium 32). Thermal conservation 3) by means of interference fit.

Once the preferred embodiment of the invention has been described and illustrated, it is important to make it clear that it does not limit the scope of the invention in question, which is in fact outlined in the appended claims.

## Claims

1. Apparatus for making beverage provided with a liquid-volume storage tank, comprising:
At least one outer casing (1), at least one liquid volume storage tank (2), and at least one thermal storage medium (3);
The liquid volume storage tank (2) and the thermal storage medium (3) being arranged inside the outer casing (1);
The liquid volume storage tank (2) being substantially enveloped by the thermal storage means (3);
The apparatus for making beverage provided with a liquid volume storage tank being especially **characterized in that**:
The outer casing (1) comprises at least one detachable portion (11);
The thermal storage medium (3) comprises at least one detachable portion (32, 33);
The detachable portion (11) of the outer casing (1) and the detachable portion (32, 33) of the thermal preservation means (3) being disposed aligned with each other; and
The detachable portion 11 of the outer casing 1 and the detachable portion 32,33 of the thermal storage medium 3 are disposed aligned relative to the position of the liquid volume storage tank 2.

2. Apparatus for making beverage provided with a liquid-volume storage tank according to claim 1, **characterized in that** the thermal storage medium (3) comprises a passive means of thermal storage.

3. Apparatus for making beverage provided with a liquid-volume storage tank according to claim 2, **characterized in that** the thermal storage medium (3) comprises a casing made of expanded polystyrene.

4. Apparatus for making beverage provided with a liquid-volume storage tank according to claim 3, **characterized in that** the expanded polystyrene casing is composed of three distinct portions (31, 32, 33).

5. Apparatus for making beverage provided with a liquid-volume storage tank according to claim 1, **characterized in that** the detachable portion (11) is disposed in the lower region of the outer casing (1).

6. Apparatus for making beverage provided with a liquid-volume storage tank according to claim 1, **characterized in that** the removal of the detachable portion (11) from the outer casing (1) and the detachable portion (33) of the medium (3) provide direct access to the liquid volume storage tank (2).

## Patentansprüche

1. Vorrichtung zur Herstellung von Getränken, versehen mit einem Flüssigkeitsvolumen-Speichertank, enthaltend:
wenigstens ein äußeres Gehäuse (1), wenigstens einen Flüssigkeitsvolumen-Speichertank (2) und wenigstens ein thermisches Speichermedium (3);
wobei der Flüssigkeitsvolumen-Speichertank (2) und das thermische Speichermedium (3) innerhalb des äußeren Gehäuses (1) angeordnet sind;
wobei der Flüssigkeitsvolumen-Speichertank (2) im Wesentlichen von den thermischen Speichereinrichtungen (3) umhüllt ist;
wobei die Vorrichtung zur Herstellung von Getränken, versehen mit einem Flüssigkeitsvolumen-Speichertank, insbesondere **dadurch gekennzeichnet ist, dass**:
das äußere Gehäuse (1) wenigstens ein abnehmbares Teil (11) enthält;
das thermische Speichermedium (3) wenigstens ein abnehmbares Teil (32, 33) enthält;
das abnehmbare Teil (11) des äußeren Gehäuses (1) und das abnehmbare Teil (32, 33) der thermischen Erhaltungseinrichtungen (3) miteinander ausgerichtet angeordnet sind; und
das abnehmbare Teil (11) des äußeren Gehäuses (1) und das abnehmbare Teil (32, 33) des thermischen Speichermediums (3) relativ zu der Position des Flüssigkeitsvolumen-Speichertanks (2) ausgerichtet angeordnet sind.

2. Vorrichtung zur Herstellung von Getränken, versehen mit einem Flüssigkeitsvolumen-Speichertank nach Anspruch 1, **dadurch gekennzeichnet, dass** das thermische Speichermedium (3) passive Einrichtungen zur thermischen Speicherung enthält.

3. Vorrichtung zur Herstellung von Getränken, versehen mit einem Flüssigkeitsvolumen-Speichertank nach Anspruch 2, **dadurch gekennzeichnet, dass** das thermische Speichermedium (3) ein Gehäuse enthält, das aus geschäumten Polystyrol hergestellt ist.

4. Vorrichtung zur Herstellung von Getränken, versehen mit einem Flüssigkeitsvolumen-Speichertank nach Anspruch 3, **dadurch gekennzeichnet, dass** das Gehäuse aus geschäumten Polystyrol aus drei eigenen Teilen (31, 32, 33) zusammengesetzt ist.

5. Vorrichtung zur Herstellung von Getränken, versehen mit einem Flüssigkeitsvolumen-Speichertank nach Anspruch 1, **dadurch gekennzeichnet, dass** das abnehmbare Teil (11) in der unteren Region des äußeren Gehäuses angeordnet ist.

6. Vorrichtung zur Herstellung von Getränken, versehen mit einem Flüssigkeitsvolumen-Speichertank nach Anspruch 1, **dadurch gekennzeichnet, dass** das Entfernen des abnehmbaren Teils (11) von dem äußeren Gehäuse (1) und des abnehmbaren Teils (33) des Mediums (3) einen direkten Zugang zu dem Flüssigkeitsvolumen-Speichertank (2) bereitstellt.

## Revendications

1. Appareil pour la préparation de boissons pourvu d'un réservoir de stockage de volume liquide, comprenant :
au moins une enveloppe extérieure (1), au moins un réservoir de stockage de volume liquide (2) et au moins un milieu de stockage de chaleur (3);
le réservoir de stockage de volume liquide (2) et le milieu de stockage de chaleur (3) étant agencés à l'intérieur de l'enveloppe extérieure (1);
le réservoir de stockage de volume liquide (2) étant sensiblement enveloppé par les moyens de stockage de chaleur (3);
l'appareil pour la préparation de boissons pourvu d'un réservoir de stockage de volume liquide étant **caractérisé en ce que** :
l'enveloppe extérieure (1) comprend au moins une partie détachable (11);
le milieu de stockage de chaleur (3) comprend au moins une partie détachable (32, 33);
la partie détachable (11) de l'enveloppe extérieure (1) et la partie détachable (32, 33) des moyens de stockage de chaleur (3) étant disposées alignées l'une avec l'autre; et
la partie détachable (11) de l'enveloppe extérieure (1) et la partie détachable (32, 33) des moyens de stockage de chaleur (3) étant disposées alignées par rapport à la position du réservoir de stockage de volume liquide (2).

2. Appareil pour la préparation de boissons pourvu d'un réservoir de stockage de volume liquide selon la revendication 1, **caractérisé en ce que** le milieu de stockage de chaleur (3) comprend des moyens passifs de stockage de chaleur.

3. Appareil pour la préparation de boissons pourvu d'un réservoir de stockage de volume liquide selon la revendication 2, **caractérisé en ce que** le milieu de stockage de chaleur (3) comprend un boîtier en polystyrène expansé.

4. Appareil pour la préparation de boissons pourvu d'un réservoir de stockage de volume liquide selon la revendication 3, **caractérisé en ce que** le boîtier en polystyrène expansé est composé de trois parties distinctes (31, 32, 33).

5. Appareil pour la préparation de boissons pourvu d'un réservoir de stockage de volume liquide selon la revendication 1, **caractérisé en ce que** la partie détachable (11) est disposée dans la région inférieure de l'enveloppe extérieure (1).

6. Appareil pour la préparation de boissons pourvu d'un réservoir de stockage de volume liquide selon la revendication 1, **caractérisé en ce que** le retrait de la partie détachable (11) de l'enveloppe extérieure (1) et de la partie détachable (33) du milieu (3) permet un accès direct au réservoir de stockage de volume liquide (2).
